# EUROPEAN PATENT APPLICATION

(11) **EP 1 201 611 A2**
(43) Date of publication of application: **02.05.2002**
(21) Application number: 01125155.0
(22) Date of filing: 23.10.2001
(51) Int. Cl.: C03B 33/033

(54) **Unit for parting a notched sheet of glass**

(30) Priority: 24.10.2000 IT TO001011
(71) Applicant: BOTTERO S.p.A., 12010 Cuneo (IT)
(72) Inventor: Ghinamo, Paolo, 12012 Boves (IT); Bisotto, Sebastiano, 12012 Boves (IT); Mattio, Roberto, 12026 Piasco (IT)
(74) Representative: Bongiovanni, Simone (IT)

(57) **Abstract**

A unit (1) for parting a sheet (2) of glass, having at least one notch line (3), has a support (4) for supporting the sheet (2), and a parting device (6) movable about the support (4) and having a movable stop member (13) and a movable pressure member (16), which are located close to an outer peripheral edge (4a) of the support (4) and are of respective lengths (L1)(L2), measured parallel to the notch -line (3), shorter than the notch line (3), so as to only cooperate with a peripheral portion (2a) of the sheet (2) projecting from the support (4); a central control unit (23) being provided to control the movement of the pressure member (16) and stop member (13) as a function of the thickness (S) of the sheet and/or the length (L) of the notch line (3).

## Description

The present invention relates to a unit for parting notched sheets of glass.

Sheets of glass with one or more notch lines are parted on parting units normally comprising a table supporting the sheet to be parted; and two top stop bars, fixed to the supporting table, and a bottom parting bar, which, in use, extend parallel to, and are the same length as, or longer than, the notched parting line on the sheet. More specifically, in use, the stop bars are located over the sheet, on opposite sides of the notch line, and the parting bar is located at the notch line, and is powered to move, through a gap formed in the supporting table, between a lowered rest position and a raised parting position to part the sheet.

Known units of the above type pose various problems, mainly due to the presence and operation of the stop and parting bars. More specifically, the presence of the bars complicates both maneuvering of the sheets on the supporting table and the structure of the supporting table itself, which must be designed to allow passage of the parting bar, as well as to house the parting bar drive unit, in itself fairly complex.

As for the parting bar itself, this, particularly when dealing with sheets of considerable size and, therefore, weight, may advance otherwise than as set, thus subjecting the sheet to stress varying in both intensity and duration.

As a result, the parted products are sometimes unacceptable in terms of quality by comprising splinters and/or edges not coinciding with the notch lines.

It is an object of the present invention to provide a parting unit designed to provide a straightforward, low-cost solution to the aforementioned problems.

According to the present invention, there is provided a unit for parting a sheet of glass, and comprising a support defining a supporting surface for a sheet of glass having at least one notch line; and parting means for parting said sheet along said notch line; said parting means comprising a stop member and a pressure member facing each other and located, in use, on opposite sides of said sheet and said notch line; and actuating means for moving said pressure member and said stop member with respect to each other; characterized in that said pressure member and said stop member are separate from said support and located close to an outer peripheral edge of said support, and are of respective lengths, measured parallel to the notch line, shorter than the length of the notch line, so as to only cooperate with an outer peripheral portion of the sheet projecting from said outer peripheral edge and crossed by said notch line.

A non-limiting embodiment of the invention will be described by way of example with reference to the accompanying drawings, in which:
Figure 1 shows a schematic section of a preferred embodiment of the parting unit according to the present invention;
Figure 2 shows a section along line II-II in Figure 1;

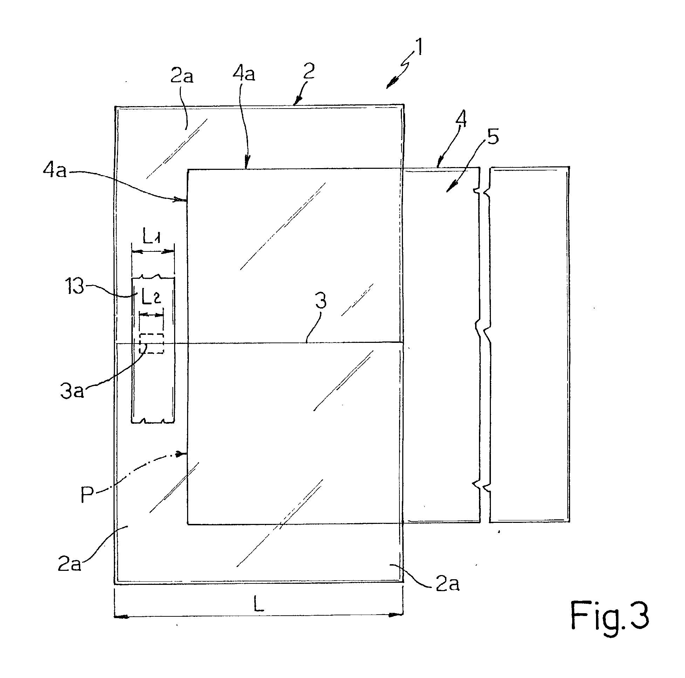

Figure 3 shows a plan view, with parts removed for clarity, of the Figure 1 and 2 unit.

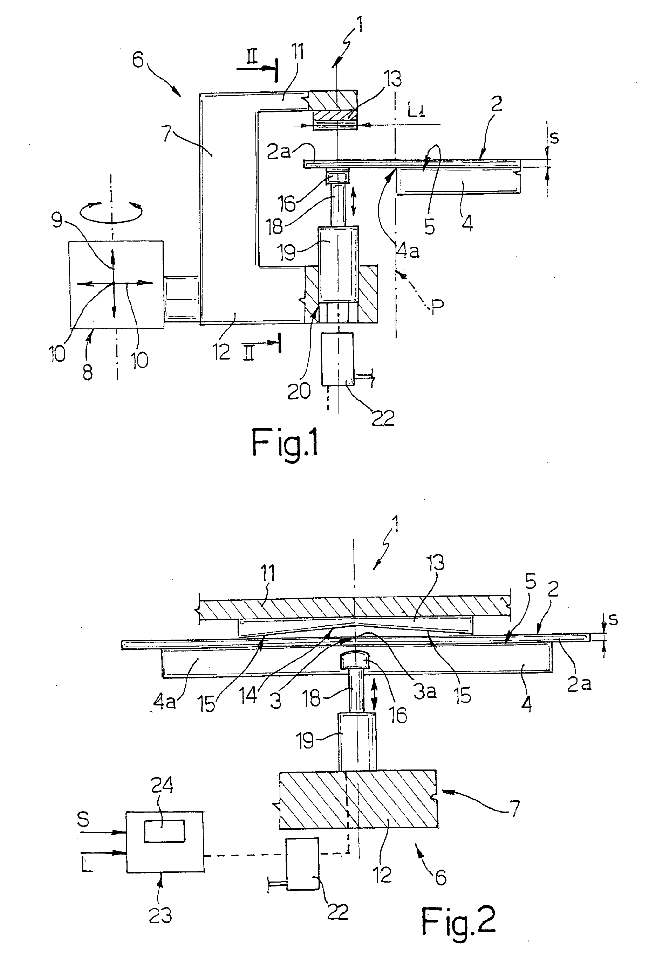

Number 1 in the accompanying drawings indicates as a whole a unit for parting a sheet 2 of glass having, in the example shown, only one notch line as indicated by 3 in Figure 2.

Unit 1 comprises a support 4 - in the example shown, a supporting table or a feed branch of a conveyor belt-defining a supporting surface 5 for sheet 2, an outer peripheral portion 2a of which projects from an outer peripheral edge 4a of support 4; and a parting device 6 separate from support 4 and comprising a powered frame 7 extending outside support 4. In the example shown, frame 7 is C-shaped with its concavity facing support 4, and is connected to a known powered actuating member 8, e.g. the wrist of a controlled-axis manipulator or any other actuating device, which forms part of unit 1 and provides for rotating frame 7 about a vertical axis 9 perpendicular to supporting surface 5, and for moving frame 7 along vertical axis 9 and around support 4 in a number of directions 10 lying in a plane parallel to supporting surface 5.

Frame 7 comprises two arms 11 and 12 projecting facing each other on opposite sides of supporting surface 5 and peripheral portion 2a of sheet 2. Arm 11 is fitted integrally with a stop member 13, which is located, in use, astride an end portion 3a of notch line 3 extending across peripheral portion 2a, and is of a length L1, measured parallel to notch line 3, shorter than the length L of line 3 and, in particular, shorter than or at most equal to the length of end portion 3a. Stop member 13 extends, in use, outside a vertical plane P through edge 4a of support 4, and is defined, on the side facing portion 2a of sheet 2, by a concave surface 14 comprising two flat portions 15 converging with each other towards arm 11 (Figure 2).

As shown in the accompanying drawings, arm 12 supports a pressure member 16 facing stop member 13 and positioned, in use, at and for exerting parting pressure on portion 3a. In the example shown, pressure member 16 is of a length L2, also measured parallel to notch line 3, equal to or less than the length of stop member 13; also extends outside plane P; and is connected integrally to the output rod 18 of a linear actuator, preferably a pneumatic or hydraulic jack 19, connected to arm 12 directly or, as in the example shown, via a powered guide-slide assembly 20 for adjusting the zero position of pressure member 16 as a function of the thickness S of sheet 2.

Pressure member 16 is moved to and from stop member 13 - in the example shown, in a direction perpendicular to supporting surface 5 - according to a predetermined law of motion depending on the characteristics of sheet 2. In the example shown, jack 19 is controlled by a proportional solenoid valve 22, which is interposed between jack 19 and a known source (not shown) supplying a compressed fluid to jack 19, and is in turn controlled by a known central control unit 23 as a function of the thickness S of sheet 2 and the length L of notch line 3, which may be sent to central control unit 23 by known detecting devices (not shown) forming part of unit 1 or not, or may be stored in a memory 24 of central control unit 23 for storing such information relative to a number of differently sized and/or notched sheets for parting. On the basis of the same information, central control unit 23 also controls powered member 8 and, hence, the movement of frame 7 along axis 9 and in directions 10.

Operation of unit 1 will now be described as of the condition in which the sheet 2 of glass is positioned on support 4 with portion 2a projecting from support 4, and pressure member 16 is in a lowered rest position separated from stop member 13 by a distance greater than thickness S of sheet 2. As of the above condition, central control unit 23 first commands actuating member 8 to position stop member 13 astride portion 3a of notch line 3, and to position pressure member 16 at portion 3a, and then commands solenoid valve 22 to move pressure member 16 gradually towards sheet 2 and force portion 2a of sheet 2 against surface 14 so as to gradually part sheet 2 along notch line 3. Simultaneously with the movement of pressure member 16, central control unit 23 also raises actuating member 8 along axis 9 to lift sheet 2 gradually and partly off supporting surface 5. Lifting sheet 2 assists in guiding the break along notch line 3 and so reducing splintering and the likelihood of the break following a course other than the notch line. Once the sheet is parted, the unit resets the actuating member and pressure member to their respective start positions and waits for the next sheet. If sheet 2 comprises further notch lines in addition to line 3, once the sheet is parted along line 3, central control unit 23 - which, in this case, knows the exact coordinates and length of each further notch line and the characteristics of the sheet portion obtained from the previous parting operation, because they are memorized beforehand and supplied to central control unit 23 - moves actuating member 8 in a plane parallel to supporting surface 5 so as to position stop and pressure members 13 and 16 at an end portion of the next notch line projecting from edge 4a, after which, the parting operations described above are repeated, and so on for each further notch line.

As compared with known solutions, unit 1 described therefore has the following advantages:

To begin with, support 4 is a straightforward support with a "clear" supporting surface, i.e. unhindered by fixed or, more importantly, transversely movable parting members, so that the sheet can be loaded easily and with no impediment on to the support either manually or by means of any handling device.

Using parting members movable about the support and only acting on end portions of the notch lines provides for fast, accurate positioning of the parting members with respect to the notch line, and, above all, for positioning the parting members with no need to adjust the position of or move the sheet on the support, which is otherwise indispensable in the case of a sheet with a number of notch lines extending in different directions. In the latter case, in fact, the sheet need simply be placed on the support so that an end portion of each notch line projects from the edge of the support, after which, the sheet is parted successively by unit 1, which automatically moves about support 4 and automatically sets the parting members to the correct parting position.

Applying parting pressure to only the end portions of the notch lines, and according to a law of motion varying according to the thickness of the sheet, the length of the notch line, and, in short, the weight and actual parting resistance of the sheet, provides, as compared with known solutions, for obtaining products of constant and, above all, superior quality in terms of shape and surface finish, and in much less time.

## Claims

1. A unit (1) for parting a sheet (2) of glass, and comprising a support (4) defining a supporting surface (5) for a sheet (2) of glass having at least one notch line (3); and parting means (6) for parting said sheet (2) along said notch line (3); said parting means (6) comprising a stop member (13) and a pressure member (16) facing each other and located, in use, on opposite sides of said sheet (2) and said notch line (3); and actuating means (19) for moving said pressure member (16) and said stop member (13) with respect to each other; **characterized in that** said pressure member (16) and said stop member (13) are separate from said support (4) and located close to an outer peripheral edge (4a) of said support (4), and are of respective lengths (L2)(L1), measured parallel to the notch line (3), shorter than the length (L) of the notch line (3), so as to only cooperate with an outer peripheral portion (2a) of the sheet (2) projecting from said outer peripheral edge (4a) and crossed by said notch line (3).

2. A unit as claimed in Claim 1, **characterized in that** said pressure member (16) and said stop member (13) are located entirely outside a vertical plane (P) through said outer peripheral edge (4a) of said support (4), and only cooperate with a portion (2a) of said sheet (2) also projecting outwards of said vertical plane (P).

3. A unit as claimed in Claim 1 or 2, **characterized by** also comprising control means (23) for controlling said actuating means (19) as a function of at least one characteristic of said sheet (2).

4. A unit as claimed in Claim 3, **characterized in that** said characteristic is the thickness (S) of said sheet (2).

5. A unit as claimed in Claim 3 or 4, **characterized in that** said characteristic is the length (L) of said notch line (3).

6. A unit as claimed in any one of Claims 3 to 5, **characterized in that** the stop member (13) is movable with respect to said support (4) in at least one direction (9) substantially perpendicular to said supporting surface (5).

7. A unit as claimed in Claim 6, **characterized by** comprising first actuating means (7, 8) for moving both said stop member (13) and said pressure member (16) in a direction (9) substantially perpendicular to said supporting surface (5).

8. A unit as claimed in Claim 7, **characterized in that** said first actuating means (7, 8) are controlled by said control means (23).

9. A unit as claimed in any one of the foregoing Claims, **characterized by** also comprising second actuating means (7, 8) for moving both said stop member (13) and said pressure member (16) in a plane parallel to said supporting surface (5).

10. A unit as claimed in any one of the foregoing Claims, **characterized by** comprising one frame (7) supporting both said stop member (13) and said pressure member (16); further actuating means (8) being provided to move said frame (7) in any direction with respect to said supporting surface (5).

11. A unit as claimed in any one of the foregoing Claims, **characterized in that** said stop member (13) is defined by a stop surface (14) which rests on the outer peripheral portion (2a) of said sheet (2) and has a concavity facing said pressure member (16).

12. A unit as claimed in Claim 11, **characterized in that** said stop surface (14) comprises two converging flat portions (15).

13. A unit as claimed in any one of the foregoing Claims, **characterized by** comprising adjusting means (20) for adjusting a zero position of said pressure member (16) with respect to said stop member (13).
